# EUROPÄISCHE PATENTSCHRIFT

(11) **EP 2 718 994 B1**
(45) Veröffentlichungstag und Bekanntmachung des Hinweises auf die Patenterteilung: **09.08.2017**
(21) Anmeldenummer: 12725744.2
(22) Anmeldetag: 04.06.2012
(51) Int. Cl.: H01M 2/02, H01M 2/10

(54) **BATTERIE, KRAFTFAHRZEUG MIT DIESER BATTERIE UND VERFAHREN ZUR MONTAGE DIESER BATTERIE**
BATTERY, MOTOR VEHICLE COMPRISING SAID BATTERY AND METHOD FOR MOUNTING SAID BATTERY
BATTERIE, VÉHICULE AUTOMOBILE ÉQUIPÉ DE CETTE DERNIÈRE ET PROCÉDÉ DE MONTAGE DE CETTE BATTERIE

(30) Priorität: 10.06.2011 DE 102011077330
(43) Veröffentlichungstag der Anmeldung: 16.04.2014
(73) Patentinhaber: ROBERT BOSCH GMBH, 70442 Stuttgart (DE); SAMSUNG SDI CO., LTD., Yongin-si, Gyeonggi-do 446-577 (KR)
(72) Erfinder: FINK, Holger, 70567 Stuttgart (DE)
(74) Vertreter: Bee, Joachim
(86) Internationale Anmeldenummer: PCT/EP2012/060462
(87) Internationale Veröffentlichungsnummer: WO 2012/168168

(56) Entgegenhaltungen:
- EP-A1- 1 852 925
- JP-A- 7 232 564
- US-A- 3 651 883

## Beschreibung

Die vorliegende Erfindung betrifft eine Batterie und ein Kraftfahrzeug mit dieser Batterie, wobei die Batterie wenigstens ein mehrere nebeneinander angeordnete Batteriezellen umfassendes Batteriemodul aufweist und das Batteriemodul auf einer Grundplatte der Batterie oder einer Grundplatte einer Untereinheit der Batterie angeordnet ist.

### Stand der Technik

Es ist bekannt, den Grundaufbau einer Batterie so zu gestalten, dass in der Batterie jeweils mehrere Batteriezellen in einem Batteriemodul zusammengefasst sind und mehrere Batteriemodule wiederum in einer Untereinheit angeordnet sind. Die Batterie ist dann aus mehreren dieser Untereinheiten gebildet.

Das Zusammenfügen dieser Bauteile zu den Baugruppen erfolgt bei bekannten Batteriekonstruktionen durch Anordnungen, welche die Bauteile zwischen einer unteren Abdeckplatte und einer oberen Abdeckplatte positionieren und diese mit Hilfe von Verschraubungen oder Bändern fixieren. Dabei ist es vorgesehen, eine der Abdeckplatten als Kühlplatte auszubilden.

So geht aus der DE 10 2008 034 863 A1 eine Batterie hervor, mit einer Mehrzahl miteinander verschalteter Batteriezellen und einer polseitig auf den Einzelzellen angeordneten und an einem Batteriegehäuse befestigten Kühlplatte. Die Kühlplatte ist dabei in mehreren Befestigungspunkten an dem Batteriegehäuse befestigt, insbesondere an Auswölbungen einer Innenwandung des Batteriegehäuses.

Die DE 10 2008 034 854 A1 beschreibt eine Batterie mit mehreren Batteriezellen und einer Kühlplatte zur Kopfkühlung der Batteriezellen. Für eine vorgespannte Befestigung der jeweiligen Batteriezelle weist die Kühlplatte eine zugehörige Verspannvorrichtung auf, welche als elastische und Kraft übertragende Einrichtung, insbesondere als federndes Klemmelement ausgebildet ist. Die Batteriezellen sind dabei an einem Polkontakt, am Zellgehäuse und/oder an einer vom Zellgehäusedeckel abstehenden Zugstange form- und kraftschlüssig gehalten.

Eine weitere Anordnung ist durch die US 3651883 A bekannt, die eine Vorrichtung zum Einspannen eines Batteriegehäuses auf einer Grundplatte mit einer Halterung und einer Klemme zeigt. Mittels eines Schraubenbolzens durch die Grundplatte und die Halterung ist das Gehäuse dabei auf der Grundplatte befestigt.

Die EP 18 529 25 A1 zeigt einen Batteriepack mit einer Anordnung mehrerer aneinander gestapelter Batteriemodule, die in einem Gehäuse untergebracht sind. Das Gehäuse weist ein Oberteil und ein Unterteil auf. Beide Gehäuseteile weisen Flanschteile auf, die übereinanderliegend mit Bolzen aneinander befestigt sind.

Die JP 72 32 564 A zeigt einen Aufbau einer Batterie. Dabei sind Fixierrahmen in mehreren Reihen in Längsrichtung auf einer Bodenplatte angeordnet, die Batteriezellen in einer Nut aufnehmen. Die Batteriezellen weisen dazu passende Ausformungen auf.

### Offenbarung der Erfindung

Es wird eine Batterie zur Verfügung gestellt, welche wenigstens ein mehrere nebeneinander angeordnete Batteriezellen umfassendes Batteriemodul aufweist. Das Batteriemodul ist auf einer Grundplatte der Batterie oder einer Grundplatte einer Untereinheit der Batterie angeordnet. Dabei weist wenigstens eine der Batteriezellen ein Batteriezellengehäuse mit wenigstens einer Ausformung auf. Mit der Ausformung ist diese eine der Batteriezellen oder das Batteriemodul mittels wenigstens eines, einen Hinterschnitt aufweisenden Halteelements auf der Grundplatte fixiert. Erfindungsgemäß ist der Hinterschnitt des wenigstens einen Halteelements in der Weise kalottenartig ausgestaltet, dass der Hinterschnitt die Ausformung nur in einem Punkt berührt Die Batterie ist dabei bevorzugt eine Li-Ionen-Batterie.

Hiermit ist vorteilhaft eine einfache Montage der Batteriezellen oder der Batteriemodule auf der Grundplatte ermöglicht. Die Batteriezellen oder die Batteriemodule sind dabei vorteilhaft mit einer definierten Anpresskraft auf der Grundplatte befestigt.

Eine hohe Anpresskraft dient neben der mechanischen Stabilität auch einer thermisch gut leitfähigen Anordnung zwischen den Batteriezellen und der Grundplatte. Eine Temperierung der Batteriezellen durch ein Thermomanagement ist daher besser möglich, insbesondere, wenn die Grundplatte, wie es bevorzugt ist, als Kühlplatte ausgestaltet ist, die Grundplatte also dazu geeignet sein soll, den Batteriezellen im Bedarfsfall Wärme zu entziehen.

Für eine Montage ist lediglich die Zugänglichkeit aus einer Richtung oberhalb der Grundplatte erforderlich. Zudem ist mit der erfindungsgemäßen Ausgestaltung vorteilhaft eine eindeutige Position der Batteriezellen oder des Batteriemoduls auf der Grundplatte vorgegeben. Damit lässt sich der Montagevorgang der erfindungsgemäßen Batterie leicht in einen automatisierten Prozess einbeziehen.

Da mit den Ausformungen einer Batteriezelle zugleich mehrere Batteriezellen befestigt werden können, ist es nicht erforderlich, dass jede einzelne Batteriezelle derartige Ausformungen aufweist.

Erfindungsgemäß ist es bevorzugt, dass wenigstens die beiden äußeren Batteriezellen des Batteriemoduls, also jene, die nur zu einer Seite an eine weitere Batteriezelle grenzen, Ausformungen aufweisen.

Mit der kalottenförmigen Ausgestaltung des Hinterschnitts des Halteelements ist die Montierbarkeit der Batteriezelle auf der Grundplatte verbessert. Gegenüber einem eben ausgestalteten Hinterschnitt, sind Verkantungen zwischen der Ausformung und dem Halteelement ausgeschlossen. Zudem lässt eine kalottenförmige Ausgestaltung des Hinterschnitts eine größere Toleranz bei der Gestalt der Ausformung zu.

In einer weiteren bevorzugten Ausgestaltung der erfindungsgemäßen Batterie ist vorgesehen, dass die wenigstens eine Ausformung und das wenigstens eine Halteelement in wenigstens zwei senkrecht zueinander stehenden Richtungen formschlüssig miteinander verbunden sind.

Hiermit ist vorteilhaft schon mit dem Einschieben einer Ausformung in den Hinterschnitt des Halteelements ein Abheben der Batteriezelle oder des Batteriemoduls von der Bodenplatte verhindert.

In einer weiteren bevorzugten Ausgestaltung der erfindungsgemäßen Batterie ist vorgesehen, dass die Batteriezellen im Wesentlichen eine quaderförmige Grundgestalt aufweisen, wobei die wenigstens eine Ausformung aus der Grundgestalt herausragt.

Hiermit ist vorteilhaft eine kompakte Bauweise des Batteriemoduls und somit auch der Batterie ermöglicht. Da bei einer Aneinanderreihung der quaderförmigen Körper kein ungenutzter Zwischenraum zwischen den einzelnen Batteriezellen entsteht, kann das Volumen der Batterie verringert werden.

In einer weiteren bevorzugten Ausgestaltung der erfindungsgemäßen Batterie ist vorgesehen, dass die Ausformung einteilig mit dem Batteriezellengehäuse ausgebildet ist.

So ist vorteilhaft die Anzahl der Einzelteile verringert. Da das Batteriezellengehäuse zudem erfindungsgemäß bevorzugt aus einem Metall gefertigt ist, insbesondere aus Aluminium, verfügt die Ausformung vorteilhaft gleichzeitig über die guten Festigkeits- und Steifigkeitswerte des Metalls.

In einer weiteren bevorzugten Ausgestaltung der erfindungsgemäßen Batterie ist vorgesehen, dass die Ausformung eine im stumpfen Winkel zum Batteriezellengehäuse angeordnete Schräge aufweist.

Die Schräge ist vorteilhaft eine sehr leicht zu realisierende Konstruktion. Die gegenüber dem Batteriezellengehäuse stumpfwinklige Anordnung sorgt zudem vorteilhaft dafür, dass sich die Anpresskraft, mit der die Batteriezelle auf die Grundplatte gedrückt wird, stetig erhöht, je weiter die Ausformung unter die Halteelemente geschoben wird.

In einer weiteren bevorzugten Ausgestaltung der erfindungsgemäßen Batterie ist vorgesehen, dass zwischen der Batteriezelle und der Grundplatte ein elektrisch isolierendes Mittel angeordnet ist. Bevorzugt sind dies elektrisch isolierende Matten, Folien oder dergleichen.

Hiermit ist vorteilhaft zusätzlich Sicherheit gegen einen elektrischen Kurzschluss geschaffen.

In einer weiteren bevorzugten Ausgestaltung der erfindungsgemäßen Batterie ist vorgesehen, dass die Batteriezellen mehrreihig auf der Grundplatte angeordnet sind

Hiermit ist es vorteilhaft ermöglicht, die Batteriezellen platzsparend dichter nebeneinander anzuordnen. Zur Fixierung zweier nebeneinander angeordneter Batteriemodule kann hierbei ein einziges Halteelement dienen. Das verringert vorteilhaft die Anzahl der zu montierenden Teile.

In einer weiteren bevorzugten Ausgestaltung der erfindungsgemäßen Batterie ist vorgesehen, dass die Halteelemente als Haltewinkel ausgeformt sind.

Die Ausgestaltung der Halteelemente als Winkel und nicht als Schiene verringert vorteilhaft das Gewicht des Batteriemoduls. Zudem erleichtert es die Montage der Batteriezellen auf der Grundplatte, da der Weg, den die Batteriezellen auf der Grundplatte verschoben werden müssen, bei entsprechender Ausgestaltung der Ausformungen - nicht über die gesamte Tiefe des Batteriemoduls - deutlich verkürzt werden kann, im Vergleich zu einer Ausgestaltung der Halteelemente als Schiene.

Erfindungsgemäß wird zudem ein Kraftfahrzeug bereitgestellt mit der erfindungsgemäßen Batterie in den zuvor genannten Ausgestaltungen, wobei die Batterie mit einem Antriebssystem des Kraftfahrzeugs verbunden ist. Die Vorteile der erfindungsgemäßen Batterie als Bauteil kommen so auch dem Kraftfahrzeug als Baugruppe zugute.

Vorteilhafte Weiterbildungen der Erfindung sind in den Unteransprüchen angegeben und in der Beschreibung ausgeführt.

Der Begriff Batterie schließt in dieser Anmeldung auch Batteriesysteme, Akkumulatoren, Akkumulatorbatterien, Akkumulatorsysteme, insbesondere Li-Ionen-Systeme oder Li-Polymer-Ionen-Systeme mit ein.

### Zeichnungen

Die vorliegende Erfindung wird anhand der Zeichnungen und der nachfolgenden Beschreibung näher erläutert. Es zeigen:
Figur 1 einen Grundaufbau einer Batterie nach dem Stand der Technik,
Figur 2 ein Batteriemodul nach dem Stand der Technik,
Figur 3 ein Befestigungsprinzip einer Batteriezelle
Figur 4 ein mehrreihiges Anordnungsprinzip eines Batteriemoduls
Figur 5 in einer Prinzipskizze eine Ausführung eines Batteriemoduls der erfindungsgemäßen Batterie mit Halteelementen mit bevorzugter Ausgestaltung, und
Figur 6 in einer räumlichen Darstellung ein Befestigungsprinzip eines Batteriemoduls Ausführungsformen der Erfindung

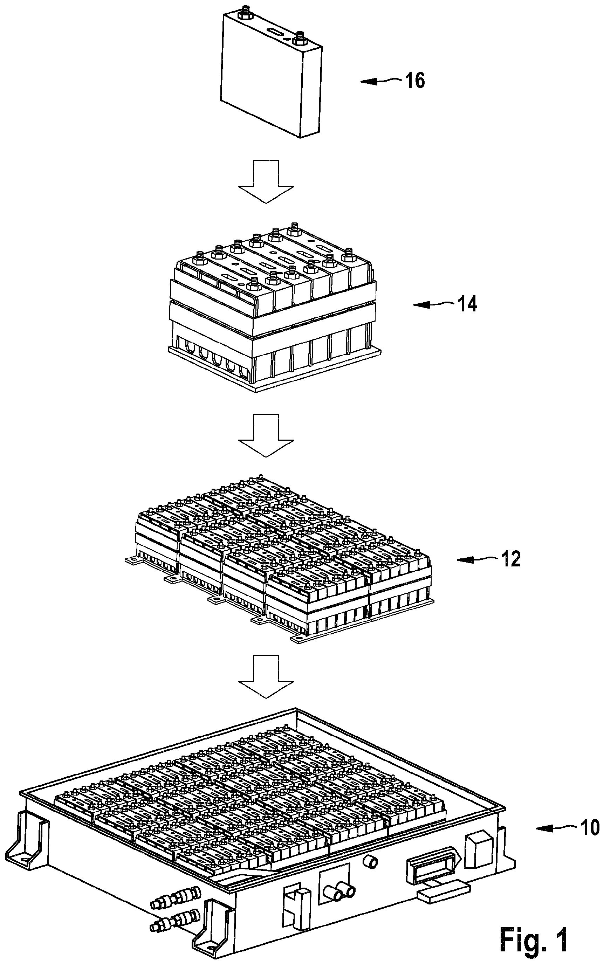

In Figur 1 ist beispielhaft und nicht beschränkend der Grundaufbau einer Batterie 10 nach dem Stand der Technik gezeigt. Die erfindungsgemäße Batterie 10 weist prinzipiell den gleichen Grundaufbau auf. In der Batterie 10 sind jeweils mehrere Batteriezellen 16 in einem Batteriemodul 14 zusammengefasst. Mehrere Batteriemodule 14 sind jeweils in einer Untereinheit 12 angeordnet. Und mehrere Untereinheiten 12 bilden hier die Batterie 10.

Es ist auch möglich, dass die Batterie 10 lediglich eine einzige Untereinheit 12 oder nur ein einziges Batteriemodul 14 umfasst oder dass die Batterie 10 weiter untergliedert ist.

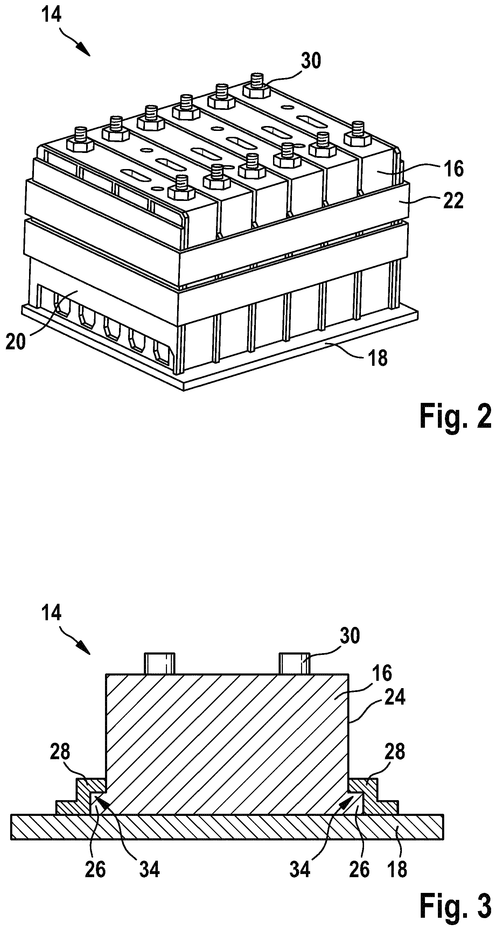

In Figur 2 ist beispielhaft und nicht beschränkend ein Batteriemodul 14 nach dem Stand der Technik gezeigt. Das Batteriemodul 14 der erfindungsgemäßen Batterie 10 beruht auf diesem Aufbau. In der abgebildeten Variante weist das Batteriemodul 14 sechs Batteriezellen 16 auf. Es können auch mehr oder weniger als sechs Batteriezellen 16 pro Batteriemodul 14 sein. Die Anzahl der Batteriezellen 16 richtet sich nach den geforderten Leistungs- und Energieparametern des Batteriemoduls 14 und den Leistungs- und Energieparametern der einzelnen Batteriezellen 16.

Die Batteriezellen 16 weisen jeweils einen im Wesentlichen prismatischen Grundkörper auf, insbesondere einen im Wesentlichen quaderförmigen Grundkörper, und sind nebeneinander gemeinsam auf einer Grundplatte 18 angeordnet. Das Batteriemodul 14 weist dadurch ebenfalls eine im Wesentlichen prismatische Grundgestalt auf, insbesondere eine im Wesentlichen quaderförmige Grundgestalt.

Bevorzugt sind die Batteriezellen 16 dabei mit ihrer Unterseite auf der Grundplatte 18 montiert, also der Körperseite, die der Körperseite gegenüberliegt, auf welcher sich die Terminals 30 befinden.

Zum Zusammenhalt der einzelnen Batteriezellen 16 sind diese bevorzugt von wenigstens einem Spannband 22 umschlossen. Um dabei die äußeren Batteriezellen 16, also jene, die nur zu einer Seite an eine weitere Batteriezelle 16 grenzen, nicht zu stark zu beanspruchen, sind an den Stirnseiten des Batteriemoduls 14 bevorzugt Druckplatten 20 vorgesehen. Die Druckplatten 20 verteilen von den Spannbändern 22 ausgeübte Kräfte großflächiger auf die äußeren Batteriezellen 16.

Optional sind zwischen den einzelnen Batteriezellen 16 Wärmeleitbleche angeordnet, um die einzelnen Batteriezellen 16 besser thermisch miteinander zu vernetzen.

Figur 3 zeigt beispielhaft und nicht beschränkend ein Befestigungsprinzip eines Batteriemoduls 14, welchem im Grunde dem der erfindungsgemäßen Batterie 10 entspricht. Dargestellt ist ein Querschnitt parallel zu einer Stirnseite des Batteriemoduls 14.

Gezeigt ist das Batteriemodul 14 mit einer Batteriezelle 16 auf einer Grundplatte 18. Die Grundplatte 18 kann dabei Teil einer Untereinheit 12 der Batterie 10 oder Teil der Batterie 10 selbst sein.

In erfindungsgemäßer Ausgestaltung weist die Batteriezelle 16 Ausformungen 26 auf, an denen diese eine Batteriezelle 16 an der Grundplatte 18 befestigt ist oder an denen diese eine Batteriezelle 16 zusammen mit anderen Batteriezellen, die keine eigenen derartigen Ausformungen aufweisen, befestigt sind.

Die Batteriezellen, die keine Ausformungen zur Befestigung an der Grundplatte 18 aufweisen, sind dabei mit der Ausformungen 26 aufweisenden Batteriezelle 16 bevorzugt durch wenigstens ein Spannband 22 gemäß Figur 2 miteinander ortsfest verbunden. Auch andere Arten von Verbindungen der Batteriezellen 16 untereinander, beispielsweise Steckverbindungen, sind denkbar.

Zur Fixierung der Ausformungen 26 sind auf der Grundplatte 18 Halteelemente 28 vorgesehen. Die Halteelemente 28 sind auf der Grundplatte 18 befestigt. Sie sind angeschweißt, -geschraubt oder -genietet oder dergleichen.

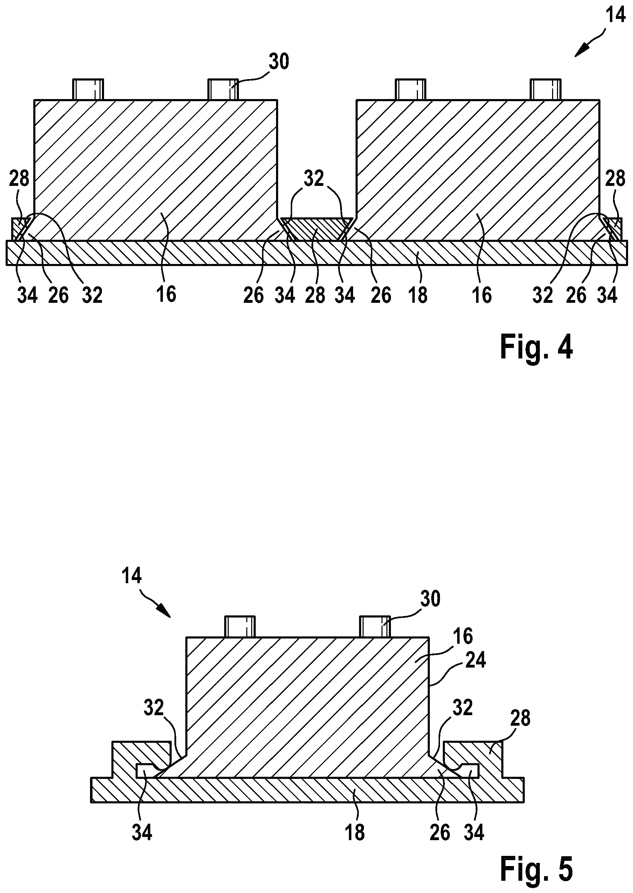

Die Halteelemente 28 weisen einen Hinterschnitt 34 auf. Dieser Hinterschnitt 34 ist in Figur 3 beispielhaft jeweils durch eine Abkröpfung ausgebildet. Eine erfinderische Ausgestaltung des Hinterschnitts 34 ist in Figur 5 gezeigt.

Auch erfindungsgemäß ist wenigstens eine Ausformung 26 an der Batteriezelle 16 vorgesehen, bevorzugt sind zumindest zwei Ausformungen 26 jeweils an den gegenüberliegenden Seitenflächen in Bodennähe der Batteriezelle 16 vorgesehen.

Die in Figur 3 gezeigte Ausgestaltung weist zwei spiegelbildlich zueinander angeordnete Ausformungen 26 an den Seitenflächen des Batteriezellengehäuses 24 in Bodennähe auf. Zusätzlich können an der Stirnseite Ausformungen 26 angeordnet sein, um die äußere der Batteriezellen 16 auch in Längsrichtung zu fixieren. Alternativ dazu kann die Grundplatte einen Vorsprung aufweisen, der in Längsrichtung, also in Figur 3 senkrecht zur Bildebene, einen Formschluss mit der äußeren Batteriezelle 16 des Batteriemoduls 14 bildet.

Für eine Montage der erfindungsgemäßen Batterie 10 wird vorab wenigstens ein Halteelement 28 an der Grundplatte 18 angebracht, beispielsweise mittels Schweißen, Nieten oder Schrauben. Die Batteriezelle 16 wird anschließend auf die Grundplatte 18 aufgesetzt und mit einer Ausformung 26 der Batteriezelle 16 unter das Halteelement 28 geschoben. Das Halteelement 28 ist dabei so gestaltet, dass die Batteriezelle 16 sowohl seitlich fixiert, als auch auf die Grundplatte 18 angepresst wird.

Danach wird die Batteriezelle 16 beziehungsweise das Batteriemodul 14 mit einem weiteren Halteelement 28 fixiert. Ein zweites gegenüberliegendes Halteelement 28 kann ebenfalls vorab auf die Grundplatte 18 aufgebracht und die Batteriezelle 16 mit jeweils einer Ausformung 26 unter die Halteelemente 28 geschoben werden.

Alternativ können vor der Montage der Batteriezellen 16 auf der Grundplatte 18 mehrere Batteriezellen 16 zu einem Batteriemodul 14 zusammengefügt werden. Dazu werden beispielsweise ein Metallband als Spannband 22 um die Batteriezellen 16 gespannt und die zusammengespannten Batteriezellen 16 als Pack auf die Grundplatte aufgesetzt und mit den Ausformungen 26 am Gehäuse zumindest einer der Batteriezellen 16 unter die Halteelemente 28 geschoben.

In Abhängigkeit von Größe und Masse des Batteriemoduls 14 ist erfindungsgemäß die Anordnung weiterer Ausformungen 26 und Halteelemente 28 vorgesehen. Diese können auch versetzt und/oder in einem Winkel zueinander angeordnet sein. Auch ist es erfindungsgemäß denkbar, dass verschiedene Ausführungen von Ausformungen 26 und Halteelementen 28 gleichzeitig vorhanden sein können.

Figur 4 zeigt beispielhaft und nicht beschränkend ein mehrreihiges Anordnungsprinzip des Batteriemoduls 14, welches im Grunde dem der erfindungsgemäßen Batterie 10 entspricht. Dargestellt ist ein Querschnitt parallel zu einer Stirnseite des Batteriemoduls 14.

Ergänzend zu der in der Figur 3 gezeigten Ausgestaltung verfügt die Variante der Figur 4 über mehrreihig, hier zweireihig, angeordnete Batteriemodule 14. Das Haltelement 28 zwischen beiden Batteriemodulen 14 ist dabei so ausgeformt, dass es zu beiden Seiten einen Hinterschnitt 34 aufweist. So ist ein einziges Haltelement 28 für die Fixierung zweier benachbarter Batteriezellen 16 vorgesehen. Die erfindungsgemäße Ausgestaltung des Hinterschnitts 34 ist in Figur 5 gezeigt.

Die Ausformungen 26 der in Figur 4 und 5 gezeigten Ausgestaltung weisen eine stumpfwinkelig zum Batteriezellengehäuse 24 ausgerichtete Schräge 32 auf. Mit dieser Schräge 32 sind die Batteriezellen 16 in montiertem Zustand unterhalb der Hinterschnitte 34 der Halteelemente 28 angeordnet.

Figur 5 zeigt in einer Prinzipskizze beispielhaft und nicht beschränkend ein Batteriemodul 14 der erfindungsgemäßen Batterie 10. Dargestellt ist ein Querschnitt parallel zu einer Stirnseite des Batteriemoduls 14.

In Figur 5 ist im Unterschied zu den zuvor beschriebenen Figuren eine bevorzugte Ausgestaltung der Halteelemente 28 gezeigt. Die Halteelemente 28 weisen eine ballige, kalottenförmige Wölbung des Hinterschnitts 34 auf. Mit dieser Ausgestaltung ist die Auflagefläche des Halteelements 28 auf der Ausformung 26 verkleinert, wodurch die Montage erleichtert wird, da es zu keinen Verkantungen oder dergleichen kommen kann.

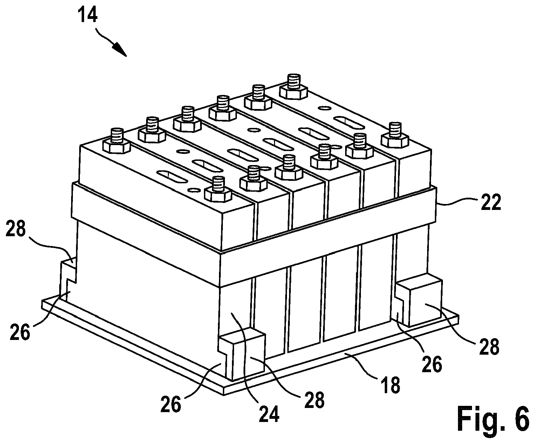

Figur 6 zeigt in einer räumlichen Darstellung beispielhaft und nicht beschränkend ein Befestigungsprinzip eines Batteriemoduls 14, welches im Grunde dem der erfindungsgemäßen Batterie 10 entspricht. Die erfindungsgemäße Ausgestaltung der Halteelemente 28 ist in Figur 5 gezeigt.

In Figur 6 sind die beiden äußeren Batteriezellen 16 des Batteriemoduls 14 mit jeweils zwei Ausformungen 26 an den Batteriezellengehäusen 24 versehen. Die Ausformungen 26 werden von vier auf der Grundplatte 18 angeordneten Halteelementen 28 aufgenommen, wobei in der gezeigten Perspektive lediglich drei Ausformungen 26 und drei Halteelemente 28 zu erkennen sind.

Die Batteriezellen, an denen keine Ausformung vorhanden ist, sind mit den beiden äußeren Batteriezellen 16 ortsfest durch ein Spannband 22 verbunden.

Die Halteelemente 28 sind hier durch Haltewinkel gebildet. Die Haltewinkel weisen zumindest eine Abkröpfung auf, unter der die Ausformungen 26 angeordnet sind. Dabei bildet jeweils eine Ausformung 26 mit einem Haltewinkel in wenigstens zwei senkrecht zueinander stehenden Richtungen einen Formschluss.

Die Breite der Haltewinkel entspricht hier beispielhaft etwa der Tiefe einer Batteriezelle 16. Zur Vereinfachung der Montage der Batteriezellen 16 auf der Grundplatte 18 weisen die Halteelemente 28 eine möglichst geringe Breite auf, wobei die Halteelemente 28 so ausgelegt sind, dass die für eine dauerhafte Befestigung notwendigen Kräfte aufgenommen werden können.

Erfindungsgemäß ist eine Ausformung der Halteelemente 18 als Schiene bevorzugt in allen Ausgestaltungen nicht vorgesehen. So beträgt die Breite der Halteelemente nur einen Teil der Tiefe des Batteriemoduls, insbesondere maximal 30 % der Tiefe des Batteriemoduls. Vorzugsweise entspricht die Breite eines Halteelements circa der Tiefe einer Batteriezelle.

## Patentansprüche

1. Batterie (10) mit wenigstens einem mehrere nebeneinander angeordnete Batteriezellen (16) umfassenden Batteriemodul (14), wobei das Batteriemodul (14) auf einer Grundplatte (18) der Batterie (10) oder einer Grundplatte (18) einer Untereinheit (12) der Batterie (10) angeordnet ist, wobei wenigstens eine der Batteriezellen (16) ein Batteriezellengehäuse (24) mit wenigstens einer Ausformung (26) aufweist und mit der Ausformung (26) diese eine der Batteriezellen (16) oder das Batteriemodul (14) mittels wenigstens eines einen Hinterschnitt (34) aufweisenden Halteelements (28) auf der Grundplatte (18) fixiert ist, **dadurch gekennzeichnet, dass** der Hinterschnitt (34) des wenigstens einen Halteelements (28) in der Weise kalottenartig ausgestaltet ist, dass der Hinterschnitt (34) die Ausformung (26) nur in einem Punkt berührt.

2. Batterie (10) nach Anspruch 1, wobei die wenigstens eine Ausformung (26) und das wenigstens eine Halteelement (28) in wenigstens zwei senkrecht zueinander stehenden Richtungen formschlüssig miteinander verbunden sind.

3. Batterie (10) nach Anspruch 1, wobei die Batteriezellen (16) im Wesentlichen eine quaderförmige Grundgestalt aufweisen, wobei die wenigstens eine Ausformung (26) aus der Grundgestalt herausragt.

4. Batterie (10) nach einem der vorherigen Ansprüche, wobei die Ausformung (26) einteilig mit dem Batteriezellengehäuse (24) ausgebildet ist.

5. Batterie (10) nach einem der vorherigen Ansprüche, wobei die Ausformung (26) eine im stumpfen Winkel zum Batteriezellengehäuse (24) angeordnete Schräge (32) aufweist.

6. Batterie (10) nach einem der vorherigen Ansprüche, wobei zwischen der Batteriezelle (16) und der Grundplatte (18) ein elektrisch isolierendes Mittel angeordnet ist.

7. Batterie (10) nach einem der vorherigen Ansprüche, wobei die Batteriezellen (16) mehrreihig auf der Grundplatte (18) angeordnet sind.

8. Batterie (10) nach einem der vorhergehenden Ansprüche, wobei die Halteelemente (28) als Haltewinkel ausgeformt sind.

9. Kraftfahrzeug mit einer Batterie (10) nach einem der Ansprüche 1 bis 8, wobei die Batterie mit einem Antriebssystem des Kraftfahrzeugs verbunden ist.

## Claims

1. Battery (10) having at least one battery module (14) which comprises a plurality of battery cells (16) which are arranged next to one another, wherein the battery module (14) is arranged on a base plate (18) of the battery (10) or a base plate (18) of a sub-unit (12) of the battery (10), wherein at least one of the battery cells (16) has a battery cell housing (24) with at least one shaped portion (26) and by way of the shaped portion (26) this one of the battery cells (16) or the battery module (14) is fixed on the base plate (18) by means of at least one retaining element (28) which has an undercut (34), **characterized in that** the undercut (34) of the at least one retaining element (28) is designed in the manner of a spherical cap in such a way that the undercut (34) makes contact with the shaped portion (26) only at one point.

2. Battery (10) according to Claim 1, wherein the at least one shaped portion (26) and the at least one retaining element (28) are connected to one another in an interlocking manner in at least two directions which are perpendicular in relation to one another.

3. Battery (10) according to Claim 1, wherein the battery cells (16) substantially have a cuboidal basic shape, wherein the at least one shaped portion (26) protrudes out of the basic shape.

4. Battery (10) according to one of the preceding claims, wherein the shaped portion (26) is integrally formed with the battery cell housing (24).

5. Battery (10) according to one of the preceding claims, wherein the shaped portion (26) has a bevel (32) which is arranged at an obtuse angle in relation to the battery cell housing (24).

6. Battery (10) according to one of the preceding claims, wherein an electrically insulating means is arranged between the battery cell (16) and the base plate (18).

7. Battery (10) according to one of the preceding claims, wherein the battery cells (16) are arranged on the base plate (18) in several rows.

8. Battery (10) according to one of the preceding claims, wherein the retaining elements (28) are formed as retaining brackets.

9. Motor vehicle having a battery (10) according to one of Claims 1 to 8, wherein the battery is connected to a drive system of the motor vehicle.

## Revendications

1. Batterie (10) comportant au moins un module de batterie (14) comprenant plusieurs éléments de batterie (16) disposés côte à côte, dans laquelle le module de batterie (14) est disposé sur une plaque de base (18) de la batterie (10) ou une plaque de base (18) d'une unité secondaire (12) de la batterie (10), dans laquelle au moins l'un des éléments de batterie (16) comporte un boîtier d'élément de batterie (24) ayant au moins une excroissance (26) et ledit élément de batterie (16) ou le module de batterie (14) est fixé par l'excroissance (26) au moyen d'au moins un élément de maintien (28) comportant une contre-dépouille (34) à la plaque de base (18), **caractérisée en ce que** la contre-dépouille (34) de l'au moins un élément de maintien (28) est configurée à la façon d'une calotte de manière à ce que la contre-dépouille (34) ne soit en contact avec l'excroissance (26) qu'en un point.

2. Batterie (10) selon la revendication 1, dans laquelle l'au moins un excroissance (26) et l'au moins un élément de maintien (28) sont reliés l'un à l'autre par complémentarité de forme dans au moins deux directions perpendiculaires l'une à l'autre.

3. Batterie (10) selon la revendication 1, dans laquelle les éléments de batterie (16) présentent une configuration de base principalement rectangulaire, dans laquelle l'au moins une excroissance (26) fait saillie par rapport à la configuration de base.

4. Batterie (10) selon l'une quelconque des revendications précédentes, dans laquelle l'excroissance (26) est réalisée d'un seul tenant avec le boîtier d'élément de batterie (24).

5. Batterie (10) selon l'une quelconque des revendications précédentes, dans laquelle l'excroissance (26) présente un biseau (32) formant un angle obtus par rapport au boîtier d'élément de batterie (24).

6. Batterie (10) selon l'une quelconque des revendications précédentes, dans laquelle un moyen électriquement isolant est disposé entre l'élément de batterie (16) et la plaque de base (18).

7. Batterie (10) selon l'une quelconque des revendications précédentes, dans laquelle les éléments de batterie (16) sont disposés en plusieurs rangées sur la plaque de base (18).

8. Batterie (10) selon l'une quelconque des revendications précédentes, dans laquelle les éléments de maintien (28) sont réalisés sous la forme d'équerres de fixation.

9. Véhicule automobile comportant une batterie (10) selon l'une quelconque des revendications 1 à 8, dans lequel la batterie est reliée à un système d'entraînement du véhicule automobile.
